# DEMANDE DE BREVET EUROPEEN

(11) **EP 4 749 869 A1**
(43) Date de publication de la demande: **27.05.2026**
(21) Numéro de dépôt: 25217030.3
(22) Date de dépôt: 19.11.2025
(51) Int. Cl.: H02J 3/32, H02J 3/38, H02J 7/34, H02J 9/06, H02J 7/35, B60L 55/00, H02J 3/388, B60L 3/00, B60L 53/53, B60L 53/63, B60L 53/51

(54) **DISPOSITIF DE GESTION D'ALIMENTATION D'UN RÉSEAU LOCAL**

(30) Priorité: 20.11.2024 FR 2412674
(71) Demandeur: NW Storm, 75007 Paris (FR)
(72) Inventeur: KERDELHUÉ, Jean-Christophe, 75007 PARIS (FR)
(74) Mandataire: Ipsilon

(57) **Abrégé**

L'invention concerne un dispositif de gestion d'alimentation (1) intégrant une entrée de réseau (3) ; une première interface d'alimentation (5) de charges critiques d'un réseau local ; un interrupteur d'îlotage (7) ;un contrôleur central (10) ; un onduleur de formation de réseau (14) configuré pour fournir une alimentation sans interruption aux charges critiques : au moins une batterie (11) ; au moins une borne de recharge (12) bidirectionnelle pour véhicule électrique (13) de sorte que la batterie domestique (11) puisse être utilisée pour recharger le véhicule électrique (13) et, lorsqu'un véhicule électrique (13) est branché avec suffisamment de charge, qu'une batterie du véhicule électrique puisse être utilisée pour recharger la batterie domestique (11) ; de sorte que le dispositif de gestion d'alimentation puisse fonctionner dans un mode îlotage dans lequel la batterie domestique (11) et/ou la batterie du véhicule électrique (13) alimentent l'interface d'alimentation (5).

## Description

### Domaine technique

La présente invention concerne la gestion de l'alimentation d'un réseau électrique local, notamment pour une habitation.

L'invention trouve une application particulièrement avantageuse pour optimiser l'usage d'une batterie domestique et d'une batterie de véhicule électrique, aussi bien lorsque le réseau local est alimenté par le réseau de distribution (mode « off-grid »), que lorsque le réseau local est alimenté par une ou les deux batteries précitées (mode « on-grid »).

### Technique antérieure

Avec l'augmentation des coûts énergétiques et les préoccupations croissantes liées à l'impact environnemental des sources d'énergie traditionnelles, il devient impératif de développer des solutions efficaces et durables pour la gestion de l'alimentation du réseau électrique local des consommateurs.

Ces solutions sont avantageusement compatibles avec des moyens de production d'énergie domestique, tel que des panneaux photovoltaïques, et permettent d'exploiter au mieux les capacités de stockage disponibles telles que les batteries domestiques, et les batteries des véhicules électriques branchés au réseau local par l'intermédiaire d'une borne de recharge.

Ces solutions comprennent parfois un mode « off-grid », ou d'îlotage, permettant une alimentation du réseau local sans recourir au réseau de distribution extérieur.

Le document US11011913 propose un tel système, permettant un mode d'îlotage lors duquel le réseau local est alimenté par la batterie d'un véhicule électrique et/ou une batterie domestique. Ce système présente l'inconvénient d'être complexe, de nécessiter une grande quantité de composants et de provoquer une interruption temporaire de l'alimentation électrique sur le réseau local, lors du déclenchement de l'îlotage.

Le problème technique de l'invention est donc de proposer un système de gestion d'alimentation d'un réseau local permettant d'exploiter de manière optimisée et efficace économiquement, en mode « on-grid » et « off-grid », l'énergie stockée dans une batterie domestique et dans un véhicule électrique, le système étant agencé de façon originale afin de réduire le nombre de composants nécessaires et de permettre l'alimentation sans interruption du réseau local.

### Exposé de l'invention

La présente invention vise à répondre à ce problème technique en proposant un dispositif de gestion d'alimentation d'un réseau local intégrant :
- une entrée de réseau, configurée pour être connectée à un réseau public d'électricité,
- une première interface d'alimentation de charges critiques du réseau local;
- un interrupteur d'îlotage dont une première borne est connectée à l'entrée de réseau ;
- un premier capteur de tension, disposé entre l'entrée de réseau et l'interrupteur d'îlotage ;
- un contrôleur central, configuré pour recevoir les mesures dudit premier capteur de tension et ouvrir l'interrupteur d'îlotage lorsque la tension mesurée est inférieure à un seuil d'îlotage pendant une première durée prédéterminée ;
- un onduleur de formation de réseau, ledit onduleur de formation de réseau comprenant une première borne de courant alternatif connectée à la seconde borne dudit interrupteur d'îlotage, une borne de courant continu, et une borne secourue de courant alternatif connectée à la première interface d'alimentation, ledit onduleur de formation de réseau étant configuré pour fournir, au niveau de la borne secourue de courant alternatif, une alimentation sans interruption aux charges critiques du réseau local indépendamment d'éventuelles perturbations sur le réseau public d'électricité ;
- au moins une batterie domestique connectée à la borne de courant continu de l'onduleur de formation de réseau, ladite batterie domestique présentant une puissance strictement inférieure à 50 kW et étant apte à :
   . alimenter au moins les charges critiques du réseau local, pendant une deuxième durée prédéterminée supérieure à la première durée prédéterminée, et
   . réinjecter de l'électricité sur l'entrée de réseau à destination du réseau public ;

   - au moins une borne de recharge bidirectionnelle pour véhicule électrique connectée à la première borne de courant alternatif de l'onduleur de formation de réseau, de sorte que la batterie domestique puisse être utilisée pour recharger le véhicule électrique et, lorsqu'un véhicule électrique est branché avec suffisamment de charge, qu'une batterie du véhicule électrique puisse être utilisée pour recharger la batterie domestique ;
le dispositif de gestion d'alimentation pouvant fonctionner dans un mode îlotage dans lequel la batterie domestique et/ou la batterie du véhicule électrique alimentent l'interface d'alimentation.

L'invention permet ainsi d'optimiser l'utilisation des batteries puisque, dans le mode de fonctionnement normal, la batterie domestique peut être utilisée en complément de la puissance fournie sur l'entrée de réseau pour alimenter la borne de recharge et permettre une recharge rapide du véhicule électrique. De plus, les charges critiques bénéficient d'une alimentation sans interruption indépendamment d'éventuelles perturbations sur le réseau public d'électricité.

En outre, dans le mode îlotage, la batterie domestique peut être complétée par la batterie du véhicule électrique pour garantir une alimentation du réseau local la plus longue possible. Dans ce mode îlotage, le véhicule électrique peut être débranché et seul la batterie domestique alimente donc le réseau local. En outre, en rechargeant régulièrement le véhicule électrique sur des bornes de recharge rapides, il est même possible de recharger la batterie domestique et d'alimenter le réseau local par la batterie du véhicule électrique de sorte à garantir une alimentation du réseau local théoriquement sur une durée illimitée, pour peu que la capacité de la batterie du véhicule électrique soit suffisante au regard de la consommation du réseau local.

Entre le mode de fonctionnement normal et le mode îlotage, l'onduleur de formation de réseau assure l'alimentation sans interruption des charges critiques du réseau local. Cette alimentation sans interruption est préférentiellement également utilisée pour alimenter certains composants du dispositif de gestion d'alimentation de l'invention, notamment le contrôleur central, les organes auxiliaires de la batterie domestique et l'interrupteur d'îlotage.

La qualité du signal électrique sur un réseau îloté, notamment son taux de distorsion harmonique, est généralement plus faible que sur un réseau non-îloté, et peut nécessiter selon la sensibilité des composants électriques sur le réseau îloté, d'avoir recours à de coûteux systèmes de filtrage. Grâce à sa fonction d'alimentation sans interruption, l'onduleur de formation de réseau peut permettre de filtrer le signal électrique en entrée du réseau local et de garantir sa qualité même en cas d'îlotage.

Outre le mode normal et le mode îlotage, il est également possible, dans un mode de réalisation préféré de l'invention, d'utiliser les batteries pour mettre en œuvre un mode d'équilibrage. Dans ce mode de réalisation, la façon dont le contrôleur central commande le dispositif de gestion dépend de la manière dont sont utilisées la batterie domestique et/ou la batterie du véhicule électrique. Plus précisément, dans ce mode, le contrôleur central est configuré pour pouvoir commander le dispositif de gestion d'alimentation d'un réseau local dans un mode d'équilibrage dans lequel l'interrupteur d'îlotage est fermé et la batterie domestique et/ou la batterie du véhicule électrique sont utilisées pour réaliser de l'injection ou du soutirage sur l'entrée de réseau. Dans un premier mode de fonctionnement correspondant à un premier type d'équilibrage, le contrôleur central est connecté à un organe de mesure des caractéristiques du signal électrique provenant du réseau, notamment de sa tension et de sa fréquence. Dans un second mode de fonctionnement correspondant à un second type d'équilibrage, le contrôleur central est en communication avec le gestionnaire de réseau par l'intermédiaire d'un réseau de communication. Il commande alors le mode d'équilibrage en fonction d'instructions envoyées par le gestionnaire de réseau.

Un autre mode de fonctionnement utilise les batteries domestique et/ou du véhicule électrique pour optimiser la fourniture d'électricité du réseau local, lorsque l'interrupteur d'îlotage est fermé. Dans ce mode de réalisation, le contrôleur central est typiquement connecté à un réseau de communication et/ou au compteur de l'installation, afin de commander le dispositif de gestion d'alimentation du réseau local pour remplir et vider les batteries au moment opportun. Par exemple, le dispositif de gestion d'alimentation du réseau peut être commandé pour :
- remplir les batteries lorsque l'électricité soutirée sur le réseau est peu chère, sans toutefois dépasser la puissance souscrite maximale admissible sur le réseau local ; et
- utiliser les batteries pour alimenter le réseau local lorsque l'électricité soutirée sur le réseau est chère.

Dans le cas d'une installation domestique, les besoins du réseau local peuvent par moment être supérieurs à la puissance pouvant être délivrée par le réseau, provoquant des coupures ou des limitations d'énergie. Cela peut se produire notamment si la puissance électrique souscrite par le consommateur et mesurée au compteur de l'installation est inférieure temporairement à la puissance soutirée, ou plus généralement si les caractéristiques du raccordement du réseau local ne permettent pas, temporairement, au réseau local de soutirer toute la puissance dont il a besoin.

Pour faire face à ce type de situation, le contrôleur central peut être configuré pour recevoir une mesure de la puissance du signal électrique mesurée au niveau de l'entrée de réseau, et pour pouvoir commander le dispositif de gestion dans un mode d'absorption de surcharge dans lequel, lorsque la puissance délivrée par le réseau est inférieure aux besoins du réseau local, la batterie domestique et/ou la batterie du véhicule électrique sont utilisées pour alimenter le réseau local en complément du réseau public. Lorsque le contrôleur central détecte une situation de surcharge, c'est-à-dire une situation où la consommation du réseau local est trop forte par rapport à un seuil fixé ou mesuré, ledit contrôleur pilote l'onduleur de formation de réseau afin qu'il injecte dans le réseau local la puissance nécessaire à la résorption de cette surcharge. L'énergie correspondante est soutirée depuis la batterie domestique et/ou la batterie de véhicule électrique.

Grâce à ces dispositions, le dispositif selon l'invention permet une utilisation optimale des ressources en énergie électrique en provenance du réseau, stockées dans la batterie domestique et dans la batterie du véhicule électrique, en mode « on-grid » aussi bien qu'en mode « off-grid ».

Le réseau connecté sur l'entrée de réseau peut correspondre à un réseau basse tension, mais l'entrée de réseau peut intégrer des organes de protection et de transformation pour connecter un réseau haute tension ou moyenne tension en fonction du réseau local à protéger. Dans le cas d'un réseau basse tension, le réseau local correspond préférentiellement à un réseau domestique.

Au moins une des charges permettant le la réalimentation du réseau local en cas de coupure, parmi le contrôleur central, et des auxiliaires de la batterie domestique et/ou de la borne de recharge, peut être connecté à la borne secourue de courant alternatif de l'onduleur de formation de réseau, de manière à ne pas recourir à une alimentation sans interruption pour au moins une de ces charges.

Le contrôleur central peut être configuré pour fermer un interrupteur terre-neutre permettant de relier à la terre le neutre de la seconde borne de l'interrupteur d'îlotage lorsque l'interrupteur d'îlotage est ouvert, ce qui permet d'effectuer automatiquement cette mise à la terre, et ainsi d'assurer la sécurité du réseau local. Dans un mode particulier de réalisation de l'invention, cet interrupteur terre-neutre peut-être directement intégré au dispositif.

La première durée prédéterminée peut être inférieure à 10 secondes, ce qui est une durée suffisante pour démarrer le mode « off-grid », et plus concrètement l'alimentation du réseau local par l'intermédiaire de la batterie domestique et/ou de la batterie du véhicule électrique.

La puissance de la batterie domestique est strictement inférieure à 50 kW, par exemple entre 5 et 20 kW, ce qui est une puissance particulièrement adaptée à un réseau domestique classique.

Ledit dispositif de gestion peut comporter une interface à une installation photovoltaïque, ladite interface étant connectée à la borne de courant continu de l'onduleur de formation de réseau, ce qui permet d'utiliser de façon optimale l'énergie produite par l'installation photovoltaïque en combinaison avec l'énergie stockée dans la batterie domestique, dans la batterie du véhicule électrique, et avec l'énergie en provenance du réseau public.

Ledit dispositif de gestion peut comporter une deuxième interface d'alimentation de charges non critiques du réseau local, connectée à la deuxième borne de l'interrupteur d'îlotage, et en ce que le contrôleur central est configuré pour qu'en cas d'ouverture de l'interrupteur d'ilotage, le contrôleur central commande à l'onduleur de formation de réseau d'alimenter les charges non critiques du réseau local par l'intermédiaire de la première borne de courant alternatif de l'onduleur de formation de réseau. Ainsi toutes les charges sont alimentées en mode « off-grid », mais seules les charges critiques bénéficient d'une alimentation sans interruption. Ceci permet de dimensionner la puissance électrique admissible sur la borne secourue de courant alternatif de l'onduleur de formation de réseau de façon optimale, l'interruption de l'alimentation de certaines charges pour une durée de par exemple 1 seconde n'étant pas préjudiciable, tout en permettant l'alimentation du réseau local en entier lorsque le mode îlotage est bien activé.

La présente invention concerne également un procédé d'utilisation d'un dispositif de gestion selon l'invention, comportant les étapes suivantes :
- alimentation des charges critiques du réseau local par le réseau public d'électricité ;
- mesure par le premier capteur de tension d'une tension inférieure audit seuil d'îlotage, signe de perturbations sur le réseau public d'électricité, entraînant l'activation de la fonction d'alimentation sans interruption de l'onduleur de formation de réseau, afin d'éviter une interruption de l'alimentation des charges critiques ;
- mesure par le premier capteur de tension d'une tension inférieure audit seuil d'îlotage pendant une première durée prédéterminée ;
- ouverture de l'interrupteur d'îlotage, et passage de l'onduleur de formation de réseau d'un mode de suivi de réseau à un mode de formation de réseau ;
- régulation de la tension sur le réseau local par l'onduleur de formation de réseau, en utilisant les mesures d'un deuxième capteur de tension situé au niveau de la deuxième borne de l'interrupteur d'îlotage,
- mesure par le premier capteur de tension d'une tension supérieure à un seuil de raccordement pendant une troisième durée prédéterminée, entraînant la fermeture de l'interrupteur d'îlotage,
- alimentation des charges critiques du réseau local par le réseau public d'électricité.

Ce procédé peut comporter en outre, juste avant l'étape de fermeture de l'interrupteur d'îlotage, une étape de synchronisation de la tension et/ou de la fréquence de l'onduleur de réseau à la tension et/ou la fréquence du réseau public d'électricité.

Ce procédé peut comporter, après l'étape d'ouverture de l'interrupteur d'îlotage, une étape d'alimentation des charges non critiques du réseau local par la batterie domestique, en passant par l'onduleur de formation de réseau.

### Brève description des dessins

La présente invention et ses avantages apparaîtront mieux dans la description suivante de plusieurs modes de réalisation donnés à titre d'exemples non limitatifs, en référence aux dessins annexés, dans lesquels :

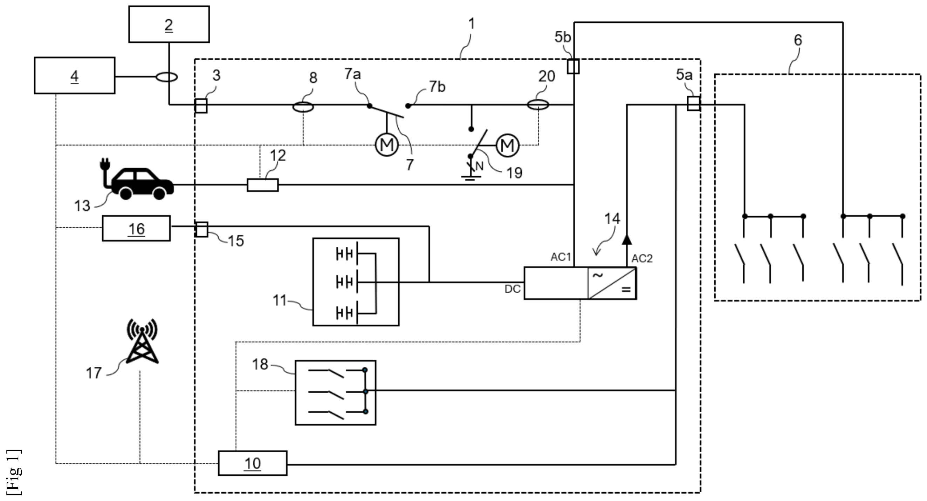

[Fig 1] la fig. 1 est une vue schématique d'un dispositif de gestion selon un mode de réalisation préféré de l'invention.

### Description des modes de réalisation

En référence à la figure 1, le dispositif de gestion d'alimentation d'un réseau local 1 selon l'invention est connecté à un réseau public 2 par l'intermédiaire d'une entrée 3, située de préférence en aval du branchement d'un compteur électrique 4. Le réseau public 2 peut être un réseau basse tension, et délivre par exemple au dispositif 1 une tension alternative monophasée ou triphasée de 230 ou 400 V, à une puissance par exemple d'environ 12 kVA. Le réseau public 2 peut également être un réseau moyenne ou haute tension.

Le dispositif 1 comporte une première interface 5a d'alimentation de charges critiques du réseau local, qui est configurée pour être connectée au tableau électrique 6 du réseau local. Le dispositif 1 peut également comporter une deuxième interface 5b d'alimentation de charges non critiques du réseau local, qui est configurée pour être connectée au tableau électrique 6 du réseau local. La première interface 5a, avec le cas échéant la deuxième interface 5b, est de préférence configurée pour être la source exclusive d'alimentation en courant électrique du tableau électrique 6. Le tableau électrique 6 est de préférence un tableau de type « TGBT », pour « Tableau Général Basse Tension ». Il peut également s'agir, dans un autre mode de réalisation de l'invention, d'un tableau divisionnaire basse tension, positionné en aval d'un « TGBT ».

Le dispositif 1 comporte encore un interrupteur d'îlotage 7, de préférence mécanisé, dont une première borne 7a est connectée à l'entrée 3, et un premier capteur de tension 8, disposé entre l'interrupteur d'îlotage 7 et l'entrée 3.

Le dispositif 1 comporte encore un contrôleur central 10. Le contrôleur central 10 est configuré pour recevoir les mesures du premier capteur de tension 8, par l'intermédiaire de moyens de communication filaires ou sans-fil connus, et pour commander l'ouverture et la fermeture de l'interrupteur d'îlotage 7. Lorsqu'une défaillance du réseau public 2 est détectée, par exemple par l'intermédiaire d'une valeur de tension inférieure à un seuil d'îlotage pendant une première durée prédéterminée, le contrôleur central 10 commande l'ouverture de l'interrupteur d'îlotage 7, afin de passer le dispositif 1 en mode « off-grid ».

Afin d'analyser plus finement l'état du courant en provenance du réseau public 2, le premier capteur de tension 8 peut être un capteur combiné de tension et de courant et/ou de fréquence, ce qui permet au contrôleur central 10 de piloter le dispositif 1 dans un mode de fonctionnement d'équilibrage du réseau, en mode « on-grid », ainsi que de prendre des décisions plus pertinentes en ce qui concerne la mise en mode « off-grid » ou non du dispositif. La supervision du réseau public 2 peut être réalisée tel que décrit dans le brevet FR 3128167.

Le dispositif 1 comporte encore un onduleur de formation de réseau 14. L'onduleur de formation de réseau 14 est un onduleur AC/DC bidirectionnel, qui comprend une première borne de courant alternatif AC1, branchée à la seconde borne 7b de l'interrupteur d'îlotage 7, une borne de courant continu DC, et une borne secourue de courant alternatif AC2 connectée à la première interface d'alimentation 5a. L'onduleur de formation de réseau 14 comporte un convertisseur pouvant synchroniser sa fréquence et tension à celle du réseau public d'électricité, dans un mode de « suivi de réseau », et délivrer une tension et une fréquence pour un réseau local dans un mode de « formation de réseau ». L'onduleur de formation de réseau 14 peut donc être utilisé pour rétablir un réseau lors d'une coupure totale du courant du réseau public 2, dans une configuration dite de « black start ».

De plus, l'onduleur de formation de réseau 14 est configuré pour fonctionner comme une alimentation sans interruption, c'est-à-dire un onduleur de type « UPS » (pour l'expression anglaise « uninterruptible power supply »). L'onduleur de formation de réseau 14 assure une fonction de continuité de service au niveau de sa borne secourue de courant alternatif AC2, afin d'éviter une interruption de l'alimentation des charges critiques du réseau local.

Pour assurer ces fonctions, l'onduleur de formation de réseau 14 est en communication avec le contrôleur central 10 par l'intermédiaire de moyens connus de communication filaires ou sans fil.

Le dispositif comporte de préférence un deuxième capteur de tension 20, pouvant être un capteur combiné de tension et de courant et/ou de fréquence, situé au niveau de la deuxième borne 7b de l'interrupteur d'îlotage 7. Le deuxième capteur de tension 20 est en communication avec le contrôleur central 10, qui transmet des informations en provenance du deuxième capteur 20 vers l'onduleur de formation de réseau 14, afin que l'onduleur de formation de réseau 14 puisse réguler la tension et la fréquence du réseau local en mode « off-grid ».

La fonction d'alimentation sans interruption est présente dans l'onduleur de formation de réseau au moyen d'un système particulier permettant de fournir une telle alimentation. Ce type de système est connu et disponible commercialement.

La publication EP3681008 A1 donne un exemple d'un tel système permettant de fournir de l'énergie électrique de manière stable à une charge, y compris au moment d'une anomalie du système d'alimentation électrique commercial. Ce système, sans sa partie « ressources énergétiques distribuées », qui dans la présente invention est constituée d'éléments décrits séparément de l'onduleur de formation de réseau 14, voir plus bas, peut être directement intégré dans l'onduleur de formation de réseau 14, pour lui conférer la fonction d'alimentation sans interruption.

La publication EP4254721 A1 donne un autre exemple de système d'alimentation sans interruption, qu'il est envisageable d'intégrer à l'onduleur de formation de réseau 14 pour lui conférer la fonction d'alimentation sans interruption

En mode « off-grid », le réseau local, composé au moins de charges critiques 5a, est alimenté par les moyens locaux de stockage d'énergie, et éventuellement par des moyens locaux de production d'énergie.

Pour ce faire, le dispositif 1 comporte au moins une batterie domestique 11, connectée à la borne de courant continu DC de l'onduleur de formation de réseau 14, et au moins une borne de recharge 12 bidirectionnelle pour un véhicule électrique 13, connectée à la première borne de courant alternatif AC1 de l'onduleur de formation de réseau 14.

La batterie domestique 11 est dimensionnée de façon à pouvoir alimenter les charges critiques du réseau local, par l'intermédiaire de l'onduleur de formation de réseau 14 fonctionnant en mode « UPS », pendant une deuxième durée prédéterminée, supérieure à la première durée prédéterminée. La première durée prédéterminée est par exemple inférieure à 10 secondes.

La batterie domestique 11 présente par exemple une puissance comprise entre 5 et 20 kW, et une capacité comprise entre 5 et 50 kWh.

Le contrôleur central 10 est de préférence connecté électriquement à l'onduleur de formation de réseau 14, sur sa deuxième borne de courant alternatif AC2. Ainsi, l'onduleur de formation de réseau 14 peut être configuré pour fournir une alimentation sans interruption au contrôleur central 10 pendant une certaine durée prédéterminée. Ceci permet qu'en cas de défaillance du réseau, l'alimentation du contrôleur central 10 ne soit pas interrompue, et qu'ainsi l'onduleur de formation de réseau 14 puisse bien piloter l'alimentation du réseau local lors du passage du dispositif 1 en mode « off-grid ».

En plus du contrôleur central 10, les auxiliaires de la batterie domestique 11, tels que les systèmes de ventilation, de refroidissement ou autre, peuvent être connectés de la même façon à l'onduleur de formation de réseau 14, ce qui permet à la batterie domestique 11 d'être opérationnelle lors du passage du dispositif 1 en mode « off-grid ».

De la même façon, le contrôleur de la borne de recharge 12 et éventuellement les autres auxiliaires de la borne de recharge 12 peuvent être connectés de la même façon à l'onduleur de formation de réseau 14, ce qui permet à la batterie du véhicule électrique 13 d'être opérationnelle pour alimenter le réseau local par l'intermédiaire de la borne de recharge 12 lors du passage du dispositif 1 en mode « off-grid ».

Les auxiliaires de la batterie domestique 11 et de la borne de recharge 12 sont représentés par le signe de référence « 18 » sur la figure 1.

Le contrôleur central 10 peut être configuré pour commander un interrupteur terre-neutre 19, de préférence mécanisé, situé au niveau de la seconde borne 7b de l'interrupteur d'îlotage 7. Lors de la mise en mode « off-grid » du dispositif 1, notamment par l'ouverture de l'interrupteur d'îlotage 7, le neutre du tableau électrique 6, selon le schéma de liaison à la terre du réseau local 1, peut ne plus être relié à la terre. Le contrôleur central 10 peut alors commander la fermeture de l'interrupteur de terre de neutre 19, afin de mettre à la terre le neutre du tableau électrique 6.

L'invention permet d'optimiser l'usage de l'énergie disponible dans la batterie domestique 11 et la batterie du véhicule électrique 13. Le contrôleur central 10 peut être relié par des moyens de communication filaires ou sans fil, d'une part au contrôleur de la batterie (ou « EMS » de la batterie, pour l'anglais « energy management system), et d'autre part à la borne de recharge 12, pour effectuer cette optimisation. Ainsi, en mode « off-grid », le contrôleur central 10 peut prendre en compte le niveau de charge de ces batteries, et leur capacité de soutirage respective, afin d'utiliser de façon intelligente la quantité d'énergie qu'elles contiennent.

Des configurations particulières peuvent être imposées au contrôleur central 10, et par exemple il peut lui être demandé de faire en sorte que la batterie du véhicule électrique 13 soit totalement chargée, chaque jour à une certaine heure, ou encore qu'elle reste toujours chargée, à toute heure, pour permettre un départ inopiné à n'importe quel moment. En mode « off-grid », il peut être préférable de maintenir la batterie du véhicule électrique 13 complètement ou partiellement chargée, afin de permettre au véhicule électrique 13 de se déplacer pour aller recharger sa batterie en-dehors du dispositif 1, afin de ramener de l'énergie dans le dispositif 1. Cela permet de continuer à alimenter le réseau local en cas de coupure longue, sans être limité par l'énergie présente dans la batterie domestique 11 et la batterie de véhicule électrique au moment de la coupure.

Le contrôleur central 10 peut être en communication avec un troisième capteur de tension et/ou de courant disposé au niveau du tableau électrique 6, afin de prendre en compte la consommation instantanée du réseau local dans la gestion du dispositif 1.

Le dispositif 1 peut comporter une interface 15 à une installation photovoltaïque 16, connectée à l'onduleur de formation de réseau 14 au niveau de sa borne de courant continu DC. Ainsi, l'installation photovoltaïque 16 peut être utilisée pour charger la batterie domestique 11, la batterie du véhicule électrique 13, ou pour alimenter le réseau local. Un ou plusieurs de ces services peut être assuré par l'installation simultanément. Le contrôleur central 10, qui est alors en communication avec l'installation photovoltaïque 16, est configuré pour prendre en compte la quantité d'énergie produite à chaque instant par l'installation photovoltaïque 16, pour décider de la façon optimale de l'utiliser.

Dans un autre mode de réalisation de l'invention, l'installation photovoltaïque 16 peut être directement intégrée au dispositif. Elle peut être reliée à l'onduleur de formation de réseau 14 par l'intermédiaire d'un convertisseur continu-continu, permettant d'ajuster le courant et la tension en aval de l'onduleur de formation de réseau.

Le contrôleur central 10 peut être relié à un réseau de communication 17, afin de permettre une gestion et/ou une surveillance à distance du dispositif 1. La gestion à distance permet notamment de synchroniser les gestions d'une pluralité de dispositifs 1, ou de prendre en compte dans la gestion du dispositif 1 l'état d'autres éléments branchés sur le réseau public 2. En outre, la communication à distance permet de prédire la production en récupérant par exemple les prévisions météorologiques.

Le dispositif selon l'invention peut être utilisé selon un procédé comportant les étapes suivantes :
- alimentation des charges critiques du réseau local par le réseau public d'électricité ;
- mesure par le premier capteur de tension 8 d'une tension inférieure audit seuil d'îlotage, signe de perturbations sur le réseau public d'électricité. Si le premier capteur de tension 8 est également un capteur de fréquence, la mesure d'une fréquence hors d'un intervalle prédéfini peut également déclencher la suite de cette étape. Dès la première occurrence d'une telle mesure, le contrôleur central 10 envoie une information à l'onduleur de formation de réseau 14 pour que l'onduleur de formation de réseau 14 active sa fonction d'alimentation sans interruption des charges critiques ;
- mesure par le premier capteur de tension 8 d'une tension inférieure audit seuil d'îlotage, ou éventuellement d'une fréquence hors d'un intervalle prédéfini, pendant une première durée prédéterminée ;
- ouverture de l'interrupteur d'îlotage 7, commandée par le contrôleur central 10, et passage de l'onduleur de formation de réseau 14 du mode de « suivi de réseau » au mode de « formation de réseau ». A cette occasion, les charges critiques restent alimentées sans interruption, ou avec une interruption très faible, considérée comme négligeable dans le cadre de la présente invention, par exemple de l'ordre de 20 ms ;
- régulation de la tension, éventuellement de la fréquence, sur le réseau local par l'onduleur de formation de réseau 14, en utilisant les mesures d'un deuxième capteur de tension et éventuellement de fréquence 20 situé au niveau de la deuxième borne 7b de l'interrupteur d'îlotage 7,
- mesure par le premier capteur de tension d'une tension supérieure à un seuil de raccordement pendant une troisième durée prédéterminée, signe que les perturbations sur le réseau public d'électricité sont terminées. Cette mesure entraîne la fermeture de l'interrupteur d'îlotage 7 commandée par le contrôleur central 10. Préalablement à cette fermeture, l'onduleur de réseau 14 peut opérer avec le réseau public d'électricité un « synchrocouplage », c'est-à-dire une synchronisation de la tension et/ou de la fréquence délivrées par l'onduleur de réseau 14 avec la tension et/ou la fréquence du réseau public d'électricité. Ceci est effectué en utilisant les mesures du premier capteur de tension et éventuellement de fréquence 8. L'avantage du « synchrocouplage » est que le passage d'une alimentation de l'onduleur de formation 14 au réseau public est transparent pour les charges,
- alimentation des charges critiques du réseau local par le réseau public d'électricité, le dispositif 1 passant donc en mode « off-grid ».

Lorsque le réseau local comporte également des charges non critiques, connectées à une deuxième interface d'alimentation 5b, le procédé ci-dessus peut comporter, après l'ouverture de l'interrupteur d'îlotage 7, une étape d'alimentation des charges non critiques par la batterie domestique et/ou la batterie du véhicule électrique 13.

L'invention permet, lorsque le dispositif 1 est en mode « on-grid », de gérer la consommation du site, par exemple en rechargeant la batterie domestique 11 et/ou celle du véhicule électrique aux heures creuses, et de décharger ces batteries pour absorber des pics de consommation lors des heures de pointe.

Le dispositif 1 selon l'invention permet également d'effectuer des charges rapides du véhicule électrique 13, car l'énergie nécessaire à la recharge peut être directement soutirée sur la batterie domestique 11, à une puissance instantanée plus élevée que celle délivrée par le réseau public 2 seul.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Dispositif de gestion d'alimentation d'un réseau local (1) intégrant :
- une entrée de réseau (3), configurée pour être connectée à un réseau public d'électricité ;
- une première interface d'alimentation (5a) de charges critiques du réseau local;
- un interrupteur d'îlotage (7) dont une première borne (7a) est connectée à l'entrée de réseau (3) ;
- un premier capteur de tension (8), disposé entre l'entrée de réseau (3) et l'interrupteur d'îlotage (7) ;
- un contrôleur central (10), configuré pour recevoir les mesures dudit premier capteur de tension (8) et ouvrir l'interrupteur d'îlotage (7) lorsque la tension mesurée est inférieure à un seuil d'îlotage pendant une première durée prédéterminée ;
- un onduleur de formation de réseau (14), ledit onduleur de formation de réseau (14) comprenant une première borne de courant alternatif (AC1) connectée à la seconde borne (7b) dudit interrupteur d'îlotage, une borne de courant continu (DC), et une borne secourue de courant alternatif (AC2) connectée à la première interface d'alimentation (5a), ledit onduleur de formation de réseau (14) étant configuré pour fournir, au niveau de la borne secourue de courant alternatif (AC2), une alimentation sans interruption aux charges critiques du réseau local ;
- au moins une batterie domestique (11) connectée à la borne de courant continu (DC) de l'onduleur de formation de réseau (14), ladite batterie domestique (11) présentant une puissance strictement inférieure à 50 kW et étant apte à :
. alimenter au moins les charges critiques du réseau local, pendant une deuxième durée prédéterminée supérieure à la première durée prédéterminée, et
. réinjecter de l'électricité sur l'entrée de réseau (3) à destination du réseau public ;
- au moins une borne de recharge (12) bidirectionnelle pour véhicule électrique (13) connectée à la première borne de courant alternatif (AC1) de l'onduleur de formation de réseau (14), de sorte que la batterie domestique (11) puisse être utilisée pour recharger le véhicule électrique (13) et, lorsqu'un véhicule électrique (13) est branché avec suffisamment de charge, qu'une batterie du véhicule électrique puisse être utilisée pour recharger la batterie domestique (11) ;
le dispositif de gestion d'alimentation pouvant fonctionner dans un mode îlotage dans lequel la batterie domestique (11) et/ou la batterie du véhicule électrique (13) alimentent l'interface d'alimentation (5).

2. Dispositif de gestion (1) selon la revendication 1*, **caractérisé en ce que*** le contrôleur central (10) est configuré pour pouvoir commander le dispositif de gestion d'alimentation d'un réseau local (1) dans un mode d'équilibrage dans lequel l'interrupteur d'îlotage (7) est fermé et la batterie domestique (11) et/ou la batterie du véhicule électrique (13) sont utilisées pour réaliser de l'injection ou du soutirage sur l'entrée de réseau (3).

3. Dispositif de gestion (1) selon l'une des revendications 1 ou 2,
***caractérisé en ce que*** le contrôleur central (10) est configuré pour recevoir une mesure de la puissance du signal électrique mesurée au niveau de l'entrée de réseau (3), et pour pouvoir commander le dispositif de gestion (1) dans un mode d'absorption de surcharge dans lequel lorsque la puissance délivrée par le réseau est inférieure aux besoins du réseau local, la batterie domestique (11) et/ou la batterie du véhicule électrique (13) sont utilisés pour alimenter le réseau local en complément du réseau public.

4. Dispositif de gestion (1) selon l'une des revendications 1 à 3,
***caractérisé en ce que*** au moins une des charges permettant la réalimentation du réseau local en cas de coupure, parmi le contrôleur central (10), et des auxiliaires (18) de la batterie domestique (11) et/ou de la borne de recharge (12), est connecté à la borne secourue de courant alternatif (AC2), de manière à ne pas recourir à une alimentation sans interruption pour au moins une de ces charges.

5. Dispositif de gestion (1) selon l'une des revendications 1 à 4,
***caractérisé en ce que*** le contrôleur central (10) est configuré pour fermer au moins un interrupteur terre-neutre (19) permettant de relier à la terre le neutre de la seconde borne (7b) de l'interrupteur d'îlotage (7) lorsque l'interrupteur d'îlotage (7) est ouvert.

6. Dispositif de gestion (1) selon l'une des revendications 1 à 5,
***caractérisé en ce que*** la première durée prédéterminée est inférieure à 10 secondes.

7. Dispositif de gestion (1) selon l'une des revendications 1 à 6,
***caractérisé en ce que*** la puissance de la batterie domestique (11) est comprise entre 5 et 20 kW.

8. Dispositif de gestion (1) selon l'une des revendications 1 à 7,
***caractérisé en ce qu'*** il comporte une interface (15) à une installation photovoltaïque (16), ladite interface (15) étant connectée à la borne de courant continu (DC) de l'onduleur de formation de réseau (14).

9. Dispositif de gestion (1) selon l'une des revendications 1 à 8,
***caractérisé en ce que*** il comporte une deuxième interface d'alimentation (5b) de charges non critiques du réseau local, connectée à la deuxième borne (7b) de l'interrupteur d'îlotage (7), et **en ce que** le contrôleur central (10) est configuré pour qu'en cas d'ouverture de l'interrupteur d'ilotage (7), le contrôleur central (10) commande à l'onduleur de formation de réseau (14) d'alimenter les charges non critiques du réseau local par l'intermédiaire de la première borne de courant alternatif (AC1) de l'onduleur de formation de réseau (14).

10. Procédé d'utilisation d'un dispositif de gestion selon l'une des revendications 1 à 9, comportant les étapes suivantes :
- alimentation des charges critiques du réseau local par le réseau public d'électricité ;
- mesure par le premier capteur de tension (8) d'une tension inférieure audit seuil d'îlotage, signe de perturbations sur le réseau public d'électricité, entraînant l'activation de la fonction d'alimentation sans interruption de l'onduleur de formation de réseau, afin d'éviter une interruption de l'alimentation des charges critiques ;
- mesure par le premier capteur de tension (8) d'une tension inférieure audit seuil d'îlotage pendant une première durée prédéterminée ;
- ouverture de l'interrupteur d'îlotage (7), et passage de l'onduleur de formation de réseau (14) d'un mode de suivi de réseau à un mode de formation de réseau ;
- régulation de la tension sur le réseau local par l'onduleur de formation de réseau (14), en utilisant les mesures d'un deuxième capteur de tension (20) situé au niveau de la deuxième borne (7b) de l'interrupteur d'îlotage (7),
- mesure par le premier capteur de tension d'une tension supérieure à un seuil de raccordement pendant une troisième durée prédéterminée, entraînant la fermeture de l'interrupteur d'îlotage (7),
- alimentation des charges critiques du réseau local par le réseau public d'électricité.

11. Procédé d'utilisation selon la revendication 10, comportant en outre, juste avant l'étape de fermeture de l'interrupteur d'îlotage (7), une étape de synchronisation de la tension et/ou de la fréquence de l'onduleur de réseau (14) à la tension et/ou la fréquence du réseau public d'électricité.

12. Procédé d'utilisation selon l'une des revendications 10 à 11 d'un dispositif de gestion selon la revendication 9, comportant après l'étape d'ouverture de l'interrupteur d'îlotage (7) une étape d'alimentation des charges non critiques du réseau local par la batterie domestique (11), en passant par l'onduleur de formation de réseau (14).
